**Europäisches Patentamt**

**European Patent Office**

**Office européen des brevets**

(11) Veröffentlichungsnummer: **0 274 767 B1**

(12) # EUROPÄISCHE PATENTSCHRIFT

(45) Veröffentlichungstag der Patentschrift:
20.02.91 Patentblatt 91/08

(51) Int. Cl.⁵: **G01D 5/16**

(21) Anmeldenummer: **87201908.8**

(22) Anmeldetag: **06.10.87**

(54) **Verfahren und Schaltungsanordnung zur Ermittlung der Stellung des Abgriffes eines Widerstandsferngebers.**

(30) Priorität: **07.10.86 DE 3634051**

(43) Veröffentlichungstag der Anmeldung:
**20.07.88 Patentblatt 88/29**

(45) Bekanntmachung des Hinweises auf die Patenterteilung:
**20.02.91 Patentblatt 91/08**

(84) Benannte Vertragsstaaten:
**DE FR GB NL**

(56) Entgegenhaltungen:
**DE-A- 2 206 609**
**DE-A- 3 205 773**
**DE-A- 3 543 280**

(73) Patentinhaber: **Philips Patentverwaltung GmbH**
**Wendenstrasse 35 Postfach 10 51 49**
**D-2000 Hamburg 1 (DE)**
**DE**
Patentinhaber: **N.V. Philips' Gloeilampenfabrieken**
**Groenewoudseweg 1**
**NL-5621 BA Eindhoven (NL)**
**FR GB NL**

(72) Erfinder: **Steinbrecher, Jürgen**
**Sudetenstrasse 10**
**D-3508 Melsungen (DE)**
Erfinder: **Schnell, Ulrich**
**Birkenallee 24**
**D-3507 Baunatal 1 (DE)**

(74) Vertreter: **Kupfermann, Fritz-Joachim, Dipl.-Ing. et al**
**Philips Patentverwaltung GmbH**
**Wendenstrasse 35 Postfach 10 51 49**
**D-2000 Hamburg 1 (DE)**

## Beschreibung

Die Erfindung bezieht sich auf ein Verfahren zur Ermittlung der Stellung k des Abgriffes eines Widerstandsferngebers, der zwei Festwiderstandsbereiche enthält, zwischen denen ein Nutzwiderstandsbereich vorhanden ist, in welchem der Abgriff verstellbar ist, und dessen erster Anschluß mit einer Stromquelle verbunden und über einen ersten Leiter mit einem Instrumentenverstärker verbindbar ist und dessen einen mittleren Anschluß bildender Abgriff mit einem zweiten Leiter verbunden ist und dessen zweiter Anschluß über einen dritten Leiter mit dem Instrumentenverstärker verbindbar ist. Ferner betrifft die Erfindung eine Schaltungsanordnung mit den Merkmalen des Oberbegriffs des Patentanspruchs 5 zur Durchführung des Verfahrens.

Ein solches Verfahren sowie eine Schaltungsanordnung zur Ausführung dieses Verfahrens sind aus den Philips-Geräten KS 4400 oder KS 4450 bekannt. Derartige Geräte dienen beispielsweise zur Erfassung des Pegelstandes einer Flüssigkeit. Dabei werden zwei Stromquellen benutzt, die jeweils mit einem Eingang eines Instrumentenverstärkers verbunden sind. Eine Stromquelle ist mit dem ersten Anschluß des Widerstandsferngebers und die andere Stromquelle mit dem zweiten Anschluß des Widerstandsferngebers verbunden. Der den mittleren Anschluß bildende verstellbare Abgriff des Widerstandsferngebers ist mit Nullpotential verbunden. Ein solcher Widerstandsferngeber weist einen Nutzwiderstandsbereich auf, in dem der Abgriff verstellbar ist und zwei Festwiderstandsbereiche, die jeweils am ersten und zweiten Anschluß des Widerstandsferngebers liegen. Die beiden Festwiderstandsbereiche und der Nutzwiderstandsbereich sind vom Benutzer einstellbar, d.h. gegebenenfalls können die Widerstandswerte der Festwiderstandsbereich gleich Null sein. Der Ausgang des Instrumentenverstärkers ist mit dem Eingang eines nachgeschalteten Analog-Digital-Umsetzers gekoppelt, der an seinem Ausgang digitale Signale für eine Anzeige oder für eine Reglereinheit liefert.

Nachteilig bei diesem bekannten Verfahren und dieser bekannten Schaltungsanordnung ist, daß die Stromquellen auf Gleichheit abgeglichen werden müssen, damit die Messung unabhängig von den Leitungswiderständen wird. Ebenso müssen Verstärkungsfehler und der Offset des Instrumentenverstärkers kompensiert werden, was aufwendige Arbeitsvorgänge darstellt. Da die ermittelten Werte in einer Digitalanzeige dargestellt werden, wird bei der bekannten Schaltungsanordnung ein Analog-Digital-Umsetzer angewendet. Dies hat zur Folge, daß neben der aufwendigen Abgleicharbeit zur Eliminierung der Leitungswiderstände noch die Temperaturdrift des Instrumentenverstärkers und noch zusätzlich die des Analog-Digital-Umsetzers in das Meßergebnis eingeht.

Das bekannte Verfahren und die bekannte Schaltungsanordnung eignen sich daher nicht zur Anwendung in Geräten, die marktbedingt in einem unteren Preisniveau angesiedelt sein müssen (Low-Cost-Geräte), da Analog-Digital-Umsetzer mit sehr geringer Temperaturdrift einen erheblichen Kostenfaktor darstellen.

Es sei noch erwähnt, daß aus Kokai 51-145 246 eine Schaltungsanordnung zur Ermittlung des Widerstandswertes eines Nutzwiderstandsbereiches von einem Widerstandsferngeber bekannt ist. Hierbei ist der erste Anschluß des Widerstandsferngebers über einen ersten Leiter mit einer Stromquelle, der mittlere Anschluß über einen zweiten Leiter mit dem nichtinvertierenden Eingang eines Verstärkers und der zweite Anschluß einerseits über einen dritten Leiter mit dem invertierenden Eingang des Verstärkes und andererseits über einen vierten Leiter mit Masse verbunden. Bei dieser Anordnung wird ebenfalls eine Eliminierung der Leitungswiderstände erreicht. Es wird jedoch nur ein Widerstandsbereich ermittelt. Die Stellung des Widerstandsferngebers ist nicht ohne weiteres bestimmbar. Außerdem ist diese Schaltungsanordnung durch Verwendung eines vierten Leiters aufwendig und teuer.

Aus der DE-OS 31 01 994 ist eine Schaltungsanordnung bekannt, die sich auf die Messung eines elektrischen Widerstandes bezieht. In dieser Anordnung sind drei Schalter mit jeweils zwei Schließkontakten vorhanden. Der erste Schließkontakt des ersten Schalters verbindet eines Stromquelle mit einem an Masse angeschlossenen Hilfswiderstand ; der andere Schließkontakt ist mit einem Analog-Digital-Umsetzer gekoppelt. Der zweite Schalter verbindet die Stromquelle, den Analog-Digital-Umsetzer und einen Referenzwiderstand. Der Referenzwiderstand ist an den massefreien Anschluß des Hilfswiderstandes angeschlossen. Der dritte Schalter verbindet den zu messenden Widerstand, der ebenfalls an den Hilfswiderstand angeschlossen ist, mit der Stromquelle und dem Analog-Digital-Umsetzer. Von den drei Schaltern, die nacheinander betätigt werden, ist jeweils nur einer geschlossen. Ein dem Analog-Digital-Umsetzer nachgeschalteter Rechner berechnet aus den drei gemessenen Spannungen am Analog-Digital-Umsetzer den Widerstand des zu messenden Widerstandes. Die Meßwerte enthalten keine temperaturabhängigen Fehler. Mit dieser Schaltungsanordnung ist es nicht möglich, die Stellung k eines Widerstandsferngebers zu bestimmen. Außerdem kann mit dieser Meßeinrichtung keine Kompensation von Leitungswiderständen durchgeführt werden.

Es ist daher Aufgabe der vorliegenden Erfindung, ein Verfahren der eingangs genannten Art und eine Schaltungsanordnung zu dessen Durchführung zu schaffen, bei dem auf einfache Weise die Stellung des Widerstandsferngebers ohne Einfluß der Leitungswiderstände bestimmt wird.

Die Aufgabe wird bei einem Verfahren der eingangs genannten Art dadurch gelöst, daß

a) eine Spannung U1 zwischem dem ersten und dem ebenfalls mit dem Instrumentenverstärker verbindbaren zweiten Leiter ermittelt wird,

b) eine Spannung U2 zwischen dem zweiten und dritten Leiter ermittelt wird,

c) eine Spannung U3 über einen zwischen dem dritten Leiter und Nullpotential liegenden Meßwiderstand Rs zur Bestimmung des durch die Leiter fließenden Stromes erfaßt wird und

d) die Stellung k in einer Digitalrecheneinrichtung anhand der Gleichung

$$k = \frac{U2 - U1}{U3} K1 + K2$$

mit den Konstanten $K1 = \frac{Rs}{2R}$ und $K2 = \frac{1}{2} + \frac{R1 - R2}{2R}$ berechnet wird, wobei $0 \leq k \leq 1$ gilt und R1 und R2 die Widerstandswerte der Festwiderstandbereiche und R der Widerstandswert des Nutzwiderstandsbereiches sind.

Bei dem erfindungsgemäßen Verfahren erfolgt die Bestimmung der Stellung k des Abgriffes des Widerstandsferngebers auf einfache Art, nämlich durch Bestimmung der Spannungen zwischen den Leitern und der Spannung am Meßwiderstand. Die Spannungen können hierbei zeitlich aufeinanderfolgend oder gleichzeitig ermittelt werden. Die Widerstandswerte R, R1, R2 und Rs können beispielsweise durch Messung vor Benutzung des Widerstandsferngebers bestimmt werden. Hierbei ist es auch möglich, die Fest- bzw. Nutzwiderstandsbereiche einzustellen. Es ist dabei auch möglich, daß die Widerstandswerte der Festwiderstandsbereiche gleich Null sind, d.h. der Abgriff ist über den gesamten Widerstandsferngeber verstellbar. Außerdem ist bei diesem Verfahren keine Abgleicharbeit zur Elimination der Leitungswiderstände erforderlich, da die Leitungswiderstände die Berechnung der Stellung k des Abgriffes nicht beeinflussen.

In einer Weiterbildung der Erfindung ist vorgesehen, daß zur Ermittlung der Konstanten K1 und K2 der Abgriff des Widerstandsferngebers an die beiden Endstellungen k=0 und k=1 gefahren wird und bei diesen Endstellungen aus den Spannungen U1, U2 und U3 die Konstanten K1 und K2 gemäß den Gleichungen

$$K1 = \frac{1}{\dfrac{U21 - U11}{U31} - \dfrac{U20 - U10}{U30}} \quad , \quad K2 = \frac{\dfrac{U20 - U10}{U30}}{\dfrac{U20 - U10}{U30} - \dfrac{U21 - U11}{U31}}$$

berechnet werden, wobei Un0, n = 1, 2, 3, eine Spannung bei k = 0 und Un1, n = 1, 2, 3, eine Spannung bei k = 1 ist. Hierbei werden nicht zur Bestimmung der Konstanten K1 und K2 die Widerstandswerte der Widerstandsbereiche gemessen, sondern der Abgriff des Widerstandsferngebers an die jeweiligen Endstellungen bei k = 0 und k = 1 gefahren und dann die Spannungen zwischen den verschiedenen Leitern und am Bezugswiderstand ermittelt. Nach der Messung der verschiedenen Spannungen lassen sich dann die Konstanten K1 und K2 berechnen.

Gemäß einer vorteilhaften Ausgestaltung des Verfahrens werden die Eingänge des Instrumentenverstärkers auf Nullpotential gelegt und nachfolgend die gemessenen Spannungen in einem dem Instrumentenverstärker nachgeschalteten Analog-Digital-Umsetzer in entsprechende Digitalwerte umgesetzt, worauf die Stellung k aus der Gleichung

$$k = \frac{D2 - D1}{D3 - D0} \; K1 + K2$$

mit

$$K1 = \frac{1}{\dfrac{D21 - D11}{D31 - D01} - \dfrac{D20 - D10}{D30 - D00}} \; , \quad K2 = \frac{\dfrac{D20 - D10}{D30 - D00}}{\dfrac{D20 - D10}{D30 - D00} - \dfrac{D21 - D11}{D31 - D01}}$$

ermittelt wird, wobei Dn, n = 1, 2, 3, die Digitalwerte der Spannungen Un, n = 1, 2, 3, D0 der Digitalwert bei Nullpotential am Eingang des Instrumentenverstärkers ist und Dn1 bzw. Dn0, n = 0, 1, 2, 3, die Digitalwerte bei den Stellungen k = 1 bzw. 0 sind.

Bei dieser Weiterbildung der Erfindung wird die Ausgangsspannung des Instrumentenverstärkers ermittelt, wenn sein Eingang kurzgeschlossen ist, d. h. auf Nullpotential liegt. Diese Ausgangsspannung des Instrumentenverstärkers bei Nullpotential am Eingang wird in einen Digitalwert D0 umgesetzt. Dieser wert D0 wird erfaßt, um dadurch den Verstärkungsfehler und den Offset des Instrumentenverstärkers und die Temperaturdrift des Instrumentenverstärkers und des Analog-Digital-Umsetzers nicht in die Messung mit eingehen zu lassen. Das erfindungsgemäße Verfahren kann im Vergleich zu dem bisher üblichen Verfahren zur Messung der Stellung k des Abgriffes eines Widerstandsferngebers verhältnismäßig einfach ausgeführt und die Kosten zur Ausführung des Verfahrens niedrig gehalten werden. Auch entfallen die bisher üblichen Abgleicharbeiten für den Instrumentenverstärker.

Vorteilhafterweise erfolgt die Berechnung der Stellung k des Abgriffes des Widerstandsferngebers und der Konstanten K1 und K2 über eine Recheneinrichtung, die beispielsweise ein Mikrocomputer sein kann und die am Ausgang des Analog-Digital-Umsetzers liegt.

Eine Schaltungsanordnung zur Durchführung des beschriebenen Verfahrens ist dadurch gekennzeichnet, daß dem Analog-/Digital-Umsetzer eine Recheneinrichtung nachgeordnet ist, der zweite Anschluß an einem an Nullpotential angeschlossenen Meßwiderstand angeschlossen ist, und daß der erste, zweite und dritte Leiter mit dem Instrumentenverstärker verbindbar ist.

Der Vorteil dieser Schaltungsanordnung gegenüber den bekannten Schaltungen besteht darin, daß hier lediglich eine Stromquelle verwendet wird, d. h. eine Abgleicharbeit zur gleichen Einstellung der Stromquellen entbehrlich ist. Die Stromquelle muß auch nicht unbedingt temperaturdriftarm ausgelegt werden, da die Messung schnell durchgeführt wird und somit die Messung weitgehend temperaturunabhängig ist. Lediglich der Bezugswiderstand muß hinreichend temperaturdriftarm sein.

Gemäß einer besonderen Ausgestaltung der Schaltungsanordnung sind die drei vom Widerstandsferngeber wegführenden Leitungen mit den Eingängen eines Multiplexers verbunden, deren Ausgänge mit dem Instrumentenverstärker verbunden sind und liegt ein weiterer Eingang des Multiplexers auf Nullpotential. Der Multiplexer gestattet es, daß die einzelnen Leiter auf vorbestimmte Weise auf die Eingänge des Instrumentenverstärkers geschaltet werden. Der dem Instrumentenverstärker nachgeschaltete Analog-Digital-Umsetzer führt das Messergebnis der Speichereinrichtung einer Recheneinrichtung oder einer beliebigen anderen Speichereinrichtung zu. Um ein präzises Messergebnis zu erreichen, ist an den Multiplexerschalter lediglich die Forderung gestellt, daß dieser sich bezüglich der Temperaturdrift möglichst gleich verhält.

Ein Ausführungsbeispiel nach der Erfindung wird nunmehr anhand der Zeichnung näher beschrieben. Darin zeigen :

Fig. 1 eine bekannte Schaltungsanordnung zur Durchführung eines bekannten Messverfahrens unter Verwendung zweier Stromquellen und

Fig. 2 eine Schaltungsanordnung zur Durchführung des erfindungsgemäßen Verfahrens zur Ermittlung der Stellung des Abgriffes eines Widerstandsferngebers.

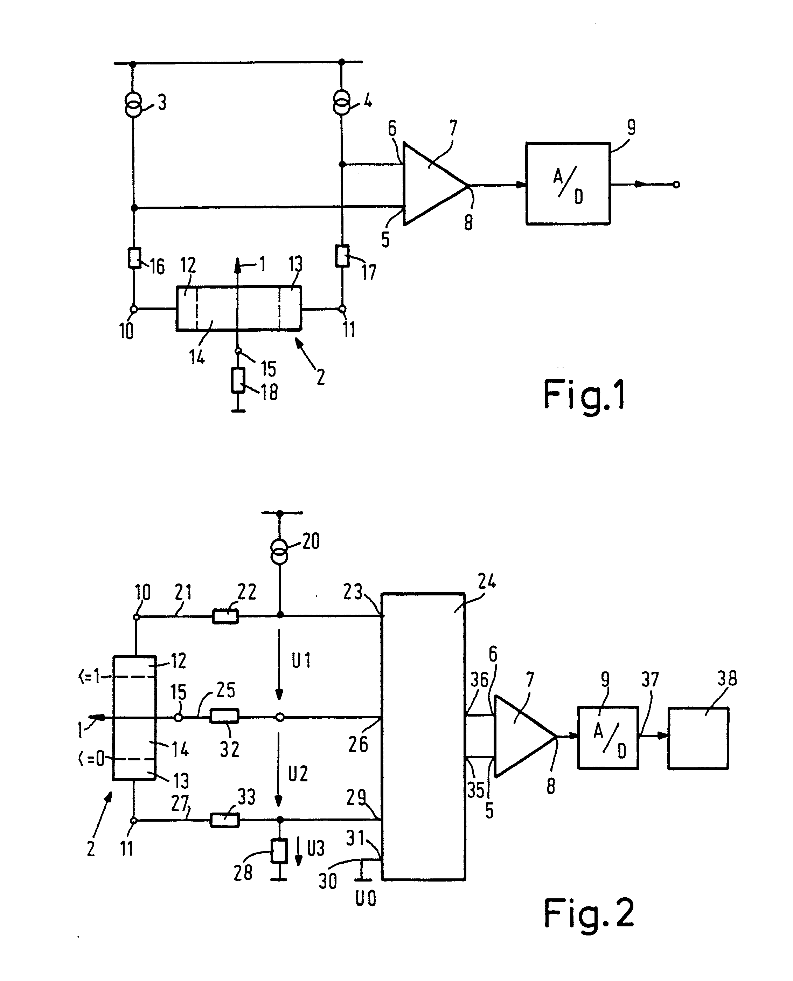

Eine bekannte Schaltungsanordnung zur Ermittlung der Stellung k eines Abgriffes 1 eines Widerstandsferngebers 2 ist in Fig. 1 dargestellt. Diese Schaltungsanordnung umfaßt zwei Stromquellen 3 und 4, die jeweils mit einem der Eingänge 5 und 6 eines Instrumentenverstärkers 7 verbunden sind. Der Ausgang 8 des Instrumentenverstärkers 7 ist an einen Analog-Digital-Umsetzer 9 angeschlossen. Der Analog-Digital-Umsetzer 9 liefert Digitalwerte beispielsweise an eine Anzeigeeinrichtung. Darüber hinaus ist die Stromquelle 3 an einen ersten Anschluß 10 und die Stromquelle 4 an einen zweiten Anschluß 11 des Widerstandsferngebers 2 angeschlossen. Der Widerstandsferngeber 2 besteht aus zwei Festwiderstandsbereichen 12 und 13 und einem Nutzwiderstandsbereich 14, in dem der Abgriff 1 verstellbar ist. Die Anschlagpunkte des Abgriffes 1 zwischen dem Fest- und Nutzwiderstandsbereich sind vom Benutzer definierbar. Der Abgriff 1 bildet einen mittleren Anschluß 15, der mit Nullpotential verbunden ist. Sowohl die beiden von den Stromquellen 3 und 4 kommenden Leiter als auch der Leiter, der den Abgriff 1 mit Nullpotential verbindet, besitzen (naturgemäß) einen Leitungswiderstand 16, 17 und 18 mit einem Widerstandswert RL.

Diese bekannte Schaltungsanordnung wird z. B. zur Pegelmessung einer Flüssigkeit benutzt. Sie erfordert zwei Stromquellen, die auf Gleichheit abgeglichen werden müssen, damit die Leitungswiderstände keinen Einfluß auf die Messung haben. Darüber hinaus müssen Abgleicharbeiten aufgrund der Abweichungen von den gewünschten Werten (z. B. Verstärkungsfehler, Offset) des Instrumentenverstärker 7 durchgeführt werden. Ebenfalls müssen hohe Anforderungen in bezug auf die Temperaturdrift des Instrumentenverstärkers 7 sowie an die Temperaturdrift des nachgeschalteten Analog-Digital-Umsetzers 9 gestellt werden, was zu teuren Geräten führt.

Eine erfindungsgemäße Schaltungsanordnung zur Ermittlung der Stellung k des Abgriffes 1 des Widerstandsferngebers 2 und zur Durchführung des erfindungsgemäßen Verfahrens ist in Fig. 2 dargestellt. Diese Schaltungsanordnung weist lediglich eine Stromquelle 20 auf, die mit einem ersten Leiter 21 verbunden ist. Der erste Leiter 21 ist über den Anschluß 10 an den Widerstandsferngeber 2 angeschlossen. Dieser Leiter 21 besitzt naturgemäß einen Leitungswiderstand, der hier durch den Widerstand 22 angedeutet wird. Darüber hinaus ist die Stromquelle 20 mit einem Eingang 23 eines Multiplexers 24 verbunden. Ein zweiter Leiter 25 ist einerseits mit dem mittleren Anschluß 15 des Widerstandsferngebers 2 und andererseits mit einem zweiten Eingang 26 des Multiplexers 24 verbunden. Ein dritter Leiter 27 ist einerseits an den Anschluß 11 des Widerstandsferngebers 2 und andererseits zum einen über einen Bezugswiderstand 28 an Nullpotential und zum anderen an einen dritten Eingang 29 des Multiplexers 24 angeschlossen. Ein vierter, mit Nullpotential verbundener Leiter 30 ist auf einen vierten Multiplexereingung 31 gelegt. Auch die zweiten und dritten Leiter 25 und 27 besitzen naturgemäß Leitungswiderstände die mit 32 und 33 bezeichnet sind.

Die beiden Ausgänge 35 und 36 des Multiplexers 24 sind an die Eingänge 5 und 6 eines Instrumentenverstärkers 7 gelegt. Der Ausgang 8 des Instrumentenverstärkers 7 ist an einen Analog-Digital-Umsetzer 9 angeschlossen, dessen Ausgang 37 mit einer Anzeige- und Digitalrecheneinrichtung 38 verbunden ist.

Zur Ermittlung der Stellung k des Abgriffes 1 des Widerstandsferngebers 2 werden vier Verfahrensschritte durchgeführt. Zunächst wird eine Spannung U1 zwischen den Leitern 21 und 25 ermittelt, dann wird eine Spannung U2 zwischen den Leitern 25 und 27 gemessen und anschließend wird eine Spannung U3 am Meßwiderstand 28 zur Bestimmung des durch die Schaltungsanordnung fließenden Stromes erfaßt. Schließlich verbindet der Multiplexer 24 seinen Eingang 31 mit seinen Ausgängen 35 und 36, so daß an den Eingängen des Instrumentenverstärkers 7 Nullpotential anliegt. Bei dieser Eingangsspannung U0 wird ein Digitalwert D0 in der Recheneinrichtung 38 bestimmt. Die Bestimmung der Ausgangsspannung des Instrumentenverstärkers 7 bei kurzgeschlossenen Eingängen dient dazu, die Abweichung der gemessenen Spannung vom gewünschten Wert durch Temperaturdrift und andere Einflußfaktoren zu bestimmen.

Die Messung erfolgt also unter jeweiliger entsprechender Umschaltung der Eingänge 23, 26, 29 und 31 des Multiplexers 24 auf die Eingänge 5 und 6 des Instrumentenverstärkers 7. Am Ausgang 37 des nachfolgend angeordneten Analog-Digital-Umsetzers 9 werden den Spannungen U1, U2, U3 und U0 entsprechende Digitalwerte D1, D2, D3 und D0 geliefert.

Die Stellung k des Abgriffes 1 des Widerstandsferngebers 2 läßt sich nun mit Hilfe der folgenden Gleichung bestimmen, die durch Aufstellung von Maschengleichungen berechenbar ist. Für die Stellung k ergibt sich also die Gleichung :

$$k = \frac{U2 - U1}{U3} K1 + K2$$

mit $K1 = \frac{Rs}{2R}$ und $K2 = \frac{1}{2} + \frac{R1 - R2}{2R}$ wobei $0 \leq k \leq 1$ ist und R1 der Widerstandswert des Festwiderstandsbereiches 12 am ersten Anschluß 10, R2 der Widerstandswert des anderen Festwiderstandsbereiches 13 am zweiten Anschluß 11 ist, R der Widerstandswert des Nutzwiderstandsbereiches 14 und Rs der Widerstandswert des Bezugswiderstandes 28 ist. Hierbei ist vorausgesetzt worden, daß k=1 ist, wenn der Abgriff am Nutzwiderstandsbereich 12 liegt, und daß k = 0 ist, wenn der Abgriff 1 am Nutzwiderstandsbereich 13 liegt. Bei diesem Verfahren ist eine Abgleicharbeit zur Elimination der Leitungswiderstände nicht erforderlich, da diese bei Gleichheit der Leitungswiderstände nicht in die Rechnung eingehen.

In der Digitalrecheneinrichtung 38 wird die Stellung k unter entsprechender Berücksichtigung der Abweichungen vom gewünschten Wert, hervorgerufen beispielsweise durch die Temperaturdrift im Instrumentenverstärker 7 und im Analog-Digital-Wandler 9, berechnet, d. h. durch entsprechende Berücksichtigung des bei Nullpotential ermittelten Digitalwertes D0 berechnet. Ein Digitalwert Dn entspricht also der Gleichung

$$Dn = V\,Un + D0,$$

wobei V die Verstärkung des Instrumentenverstärkers 7 und des Analog-Digital-Umsetzers 9 ist. Hieraus ergibt sich dann :

$$k = \frac{D2 - D1}{D3 - D0} K1 + K2$$

Die Konstanten K1 und K2 können beispielsweise in der Digitalrecheneinrichtung aus den eingegebenen Widerstandswerten R, $R_1$, $R_2$ und Rs berechnet werden. Dabei werden vom Benutzer nach Festlegung der beiden Festwiderstandsbereiche und des Nutzwiderstandsbereiches die einzelnen Widerstandswerte gemessen und in die Digitalrecheneinrichtung eingegeben. Die Konstanten K1 und K2 lassen sich aber nach Festlegung der Widerstandsbereiche des Widerstandsferngebers 2 durch ein anderes Verfahren berechnen. Hierbei wird der Abgriff 1 des Widerstandsferngebers 2 jeweils an die Endpunkte des Nutzwiderstandsbereiches bei k = 1 und k = 0 gefahren und bei jeder Endstellung die Spannungen U1, U2 and U3 und Nullpotential an den Eingang des Instrumentenverstärkers 7 gelegt. Es ergeben sich dann die beiden Gleichungen :

$$K1 = \frac{1}{\dfrac{U21 - U11}{U31} - \dfrac{U20 - U10}{U30}} \quad , \quad K2 = \frac{\dfrac{U20 - U10}{U30}}{\dfrac{U20 - U10}{U30} - \dfrac{U21 - U11}{U31}}$$

wobei Un0, n = 1, 2, 3, eine Spannung bei k = 0 und Un1, n = 1, 2, 3, eine Spannung bei k = 1 ist. Unter Berücksichtigung der Gleichung Dn = V Un + D0 ergeben sich für die Konstanten K1 und K2

$$K = \frac{1}{\dfrac{D21 - D11}{D31 - D01} - \dfrac{D20 - D10}{D30 - D00}} \quad , \quad K2 = \frac{\dfrac{D20 - D10}{D30 - D00}}{\dfrac{D20 - D10}{D30 - D00} - \dfrac{D21 - D11}{D31 - D01}} \quad ,$$

wobei Dn, n = 1, 2, 3, die Digitalwerte der Spannungen Un, n = 1, 2, 3, D0 der Digitalwert bei Nullpotential

6

am Eingang des Instrumentenverstärkers ist und Dn1 bzw. Dn0, n = 0, 1, 2, 3, die Digitalwerte bei den Stellungen k = 1 bzw. 0 sind.

**Ansprüche**

1. Verfahren zur Ermittlung der Stellung k des Abgriffes eines Widerstandsferngebers, der zwei Festwiderstandsbereiche enthält, zwischen denen ein Nutzwiderstandsbereich angeordnet ist, in welchem der Abgriff verstellbar ist, und dessen erster Anschluß mit einer Stromquelle verbunden und über einen ersten Leiter mit einem Instrumentenverstärker verbindbar ist und dessen einen mittleren Anschluß bildender Abgriff mit einem zweiten Leiter verbunden ist und dessen zweiter Anschluß über einen dritten Leiter mit dem Instrumentenverstärker verbindbar ist, <u>dadurch gekennzeichnet, daß</u>

a) eine Spannung U1 zwischen dem ersten und dem ebenfalls mit dem Instrumentenverstärker verbindbaren zweiten Leiter ermittelt wird,

b) eine Spannung U2 zwischen dem zweiten und dritten Leiter ermittelt wird,

c) eine Spannung U3 über einen zwischen dem dritten Leiter und Nullpotential liegenden Bezugswiderstand Rs zur Bestimmung des durch die Leiter fließenden Stromes erfaßt wird und

d) die Stellung k in der Digitalrechenanordnung anhand der Gleichung

$$k = \frac{U2 - U1}{U3} K1 + K2$$

mit den Konstanten $K1 = \frac{Rs}{2R}$ und $K2 = \frac{1}{2} + \frac{R1 - R2}{2R}$ berechnet wird, wobei $0 \leq k \leq 1$ gilt und R1 und R2 die Widerstandswerte der Festwiderstandsbereiche und R der Widerstandswert des Nutzwiderstandsbereichs sind.

2. Verfahren nach Anspruch 1, <u>dadurch gekennzeichnet</u>, daß zur Ermittlung der Konstanten K1 und K2 der Abgriff des Widerstandsferngebers an die beiden Endstellungen k = 0 und k = 1 gefahren wird und bei diesen Endstellungen aus den Spannungen U1, U2 und U3 die Konstanten K1 und K2 gemäß den Gleichungen

$$K1 = \frac{1}{\dfrac{U21 - U11}{U31} - \dfrac{U20 - U10}{U30}} \quad , \quad K2 = \frac{\dfrac{U20 - U10}{U30}}{\dfrac{U20 - U10}{U30} - \dfrac{U21 - U11}{U31}}$$

berechnet werden, wobei Un0, n = 1, 2, 3, eine Spannung bei k = 0 und Un1, n = 1, 2, 3, eine Spannung bei k = 1 ist.

3. Verfahren nach Anspruch 2, <u>dadurch gekennzeichnet</u>, daß die Eingänge des Instrumentenverstärkers auf Nullpotential gelegt werden und daß nachfolgend die gemessenen Spannungen in einem dem Instrumentenverstärker nachgeschalteten Analog-Digital-Umsetzer in entsprechende Digitalwerte umgesetzt werden, worauf die Stellung k aus der Gleichung

$$k = \frac{D2 - D1}{D3 - D0} \cdot K1 + K2$$

mit

$$K1 = \frac{1}{\dfrac{D21 - D11}{D31 - D01} - \dfrac{D20 - D10}{D30 - D00}}, \quad K2 = \frac{\dfrac{D20 - D10}{D30 - D00}}{\dfrac{D20 - D10}{D30 - D00} - \dfrac{D21 - D11}{D31 - D01}},$$

ermittelt wird, wobei Dn, n = 1, 2, 3, die Digitalwerte der Spannungen Un, n = 1, 2, 3, D0 der Digitalwert bei Nullpotential am Eingang des Instrumentenverstärkers ist und Dn1 bzw. Dn0, n = 0, 1, 2, 3, die Digitalwerte bei den Stellungen k = 1 bzw. 0 sind.

4. Verfahren nach einem der Ansprüche 1 bis 3, dadurch gekennzeichnet, daß die Berechnung der Stellung k des Abgriffes des Widerstandsferngebers und der Konstanten K1 und K2 über eine Recheneinrichtung erfolgt.

5. Schaltungsanordung zur Durchführung des Verfahrens nach einem der Ansprüche 1 bis 4 mit einem verstellbaren Abgriff Widerstandsfernregler, der einein (1) und zwei Festwiderstandsbereiche (12, 13) enthält, zwischen denen ein Nutzwiderstands bereich (14) für den Abgriff (1) vorhanden ist, wobei eine Anschluß (10) eines der Festwiderstandsbeveiche des Widerstandsferngebers mit einer Stromquelle (20) verbunden ist und einem ersten Leiter (21) aufweist, ein Anschluß (11) des anderen Festwiderstandßereiches einen dritten Leiter (27) aufweist und diese Leiter an einen Instrumentenverstärker (7) mit nachgeschalbeten Analog/Digital-Umsetzer (9) gekoppelt sind und ein Anschluß (15) des Abgriffs einen zweiten Leiter (25) aufweist, dadurch gekennzeichnet, daß dem Analog/Digital-Umsetzer (9) eine Recheneinrichtung (38) nachgeschaltet ist, der dritt Leiter (27) an einem an Nullpotential angeschlossenen Meßwiderstand (28) angeschlossen ist und der erste, zweite und dritte Leiter (21, 25, 27) mit dem Instrumentenverstärker (7) verbindbar ist.

6. Schaltungsanordnung nach Anspruch 5, dadurch gekenneichnet, daß die drei vom Widerstandsferngeber (2) wegführenden Leitungen (21, 25, 27) mit den Eingängen (23, 26, 29) eines Multiplexers (24) verbunden sind, desen Ausgänge (35, 36) mit dem Instrumentenverstärker (7) verbunden sind und daß ein weiterer Eingang (31) des Multiplexers (24) auf Nullpotential liegt.

7. Schaltungsanordnung nach Anspruch 6, dadurch gekennzeichnet, daß die Multiplexereingänge (23, 26, 29, 31) zur Weitergabe der Spannungen U1, U2 und U3 und des Nullpotentials an den Instrumentenverstärker (7) in vorbestimmter Reihenfolge auf die Eingänge dieses Instrumentenverstärkers (5, 6) schaltbar sind.

## Claims

1. A method of determining the position $k$ of the tap of a remotely controlled resistance transmitter comprising two fixed resistance ranges wherebetween there exists a useful resistance range in which the tap is adjustable the first terminal of the resistance transmitter being connected to a current source and being connectable via a first conductor to an instrumentation amplifier its tap which constitutes a central terminal being connected to a second conductor and its second terminal being connectable to the instrumentation amplifier via a third conductor characterized in that

a) a voltage U1 is determined between the first conductor and the second conductor which can also be connected to the instrumentation amplifier
a voltage U2 is determined between the second conductor and the third conduct,

c) a voltage U3 is measured across a reference resistor Rs between the third conductor and zero potential in order to determine the current flowing through the conductors, and
d) the position $\underline{k}$ is calculated in a digital computer on the basis of the equation

$$k = \frac{U2 - U1}{U3} K1 + K2$$

with the constants $K1 = \dfrac{Rs}{2R}$ und $K2 = \dfrac{1}{2} + \dfrac{R1 - R2}{2R}$, where $0 \leq k \leq 1$ and R1 and R2 are the resistance values of the fixed resistance ranges and R is the resistance value of the useful resistance range.

2. A method as claimed in Claim 1 <u>characterized in that</u> for determining the constants K1 and K2 the tap of the resistance transmitter is moved to the two extreme positions k=0 and k=1 in these extreme positions the constants K1 and K2 being calculated from the voltages U1 U2 and U3 according to the equations

$$K1 = \frac{1}{\dfrac{U21 - U11}{U31} - \dfrac{U20 - U10}{U30}}, \quad K2 = \frac{\dfrac{U20 - U10}{U30}}{\dfrac{U20 - U10}{U30} - \dfrac{U21 - U11}{U31}}$$

where Un0, n = 1, 2, 3, is a voltage at k=0 and Un1, n = 1, 2, 3 is a voltage at k=1.

3. A method as claimed in Claim 2, <u>characterized in that</u> the inputs of the instrumentation amplifier are connected to zero potential after which the measured voltages are converted into corresponding digital values in an analog-to-digital converter succeeding the instrumentation amplifier after which the position $\underline{k}$ is determined from the equation :

$$k = \frac{D2 - D1}{D3 - D0} K1 + K2$$

with

$$K1 = \frac{1}{\dfrac{D21 - D11}{D31 - D01} - \dfrac{D20 - D10}{D30 - D00}}, \quad K2 = \frac{\dfrac{D20 - D10}{D30 - D00}}{\dfrac{D20 - D10}{D30 - D00} - \dfrac{D21 - D11}{D31 - D01}}$$

where Dn, n = 1, 2, 3 represents the digital values of the voltages Un, n = 1, 2, 3 D0 is the digital value at zero potential at the input of the instrumentation amplifier and Dn1 and Dn0, n = 0, 1, 2, 3, represent digital values in the positions k = 1 and 0, respectively

4. A method as claimed in any one of Claims 1 to 3, <u>characterized in that</u> the calculation of the position k of the tap of the resistance transmitter and of the constants K1 and K2 is performed by means of a calculation device

5. A circuit arrangement for carrying out the method claimed in any one of Claims 1 to 4 comprising a remotely controlled resistance transmitter which comprises an adjustable tap (1) and two fixed resistance ranges (12, 13) wherebetween there exists a useful resistance range (14) for the tap (1), a first terminal (10) of one of the fixed resistance ranges of the resistance transmitter being connected to a current source (20) and comprising a first conductor (21) a terminal (11) of the other fixed resistance range comprising a third conductor (27), said conductor being coupled to an instrumentation amplifier (7) with a subsequent analog-to-digital converter (9) a terminal (15) of the tap comprising a second conductor (25), <u>characterized in that</u> the analog-to-digital converter (9) is succeeded by a calculation device (38), the third conductor (27) being connected to a measuring resistor (28) connected to zero potential the first, the second, and the third conductor (21, 25, 27) being connectable to the instrumentation amplifier (7).

6. A circuit arrangement as claimed in Claim 5 <u>characterized in that</u> the three conductors (21, 25, 27) extending away from the resistance transmitter (2) are connected to the inputs (23, 26, 29) of a multiplexer (24) whose outputs (35, 36) are connected to the instrumentation amplifier (7), a further input (31) of the multiplexer (24) being connected to zero potential

7. A circuit arrangement as claimed in Claim 6 <u>characterized in that</u> the multiplexer inputs (23, 26,29, 31) for applying the voltages U1, U2 and U3 and the zero potential to the instrumentation amplifier (7) can be switched to the inputs of this instrumentation amplifier (5, 6) in a predetermined order of succession.

## Revendications

1. Procédé pour déterminer la position k de la prise d'un télétransmetteur à résistance présentant deux gammes de résistance fixes entre lesquelles est située une gamme de résistance utile dans laquelle peut être ajustée la prise, télétransmetteur dont une première borne est reliée à une source de courant et peut être reliée à un amplificateur d'instruments à travers un premier conducteur et dont une prise formant une borne centrale est reliée à un deuxième conducteur et dont une deuxième borne peut être reliée à l'amplificateur d'instruments à travers un troisième conducteur, caractérisé en ce que

a) l'on détermine une tension U1 entre le premier conducteur et le deuxième conducteur, qui peut également être relié à l'amplificateur d'instruments,

b) l'on détermine une tension U2 entre le deuxième et le troisième conducteur,

c) l'on détecte une tension U3 aux bornes d'une résistance de mesure Rs disposée entre le troisième conducteur et le potentiel zéro pour déterminer le courant traversant le conducteur et

d) l'on calcule la position k dans un dispositif de calcul numérique selon la relation

$$k = \frac{U2 - U1}{U3} K1 + K2$$

avec les constantes $K1 = \frac{Rs}{2R}$ und $K2 = \frac{1}{2} + \frac{R1 - R2}{2R}$ où $0 \leq k \leq 1$ et R1 et R2 sont les valeurs des gammes de résistance fixes et R est la valeur de la gamme de résistance utile

2. procédé selon la revendication 1 caractérisé en ce que, pour déterminer les constants K1 et K2, la prise du télétransmetteur à résistance est amenée dans les deux positions finales k = 0 et k = 1 et en ce que, dans ces positions finales on calcule à partir des tensions U1, U2 et U3 les constantes K1 et K2 selon les relations

$$K1 = \frac{1}{\dfrac{U21 - U11}{U31} - \dfrac{U20 - U10}{U30}} \quad , \quad K2 = \frac{\dfrac{U20 - U10}{U30}}{\dfrac{U20 - U10}{U30} - \dfrac{U21 - U11}{U31}}$$

où Un0, n = 1, 2, 3, est une tension pour k=0 et Un1 n = 1, 2, 3, est une tension pour k=1.

3. procédé selon la revendication 2, caractérisé en ce que les entrées de l'amplificateur d'instruments sont mises au potentiel zéro et, ensuite, les tensions mesurées sont converties en valeurs numériques correspondantes dans un convertisseur analogique-numérique disposé après l'amplificateur d'instruments, après quoi la position k est déterminée à partir de la relation

$$k = \frac{D2 - D1}{D3 - D0} \, K1 + K2$$

avec

$$K1 = \frac{1}{\dfrac{D21 - D11}{D31 - D01} - \dfrac{D20 - D10}{D30 - D00}} \quad , \quad K2 = \frac{\dfrac{D20 - D10}{D30 - D00}}{\dfrac{D20 - D10}{D30 - D00} - \dfrac{D21 - D11}{D31 - D01}}$$

où Dn, n = 1, 2, 3, sont les valeurs numériques des tensions Un, n = 1, 2, 3, D0 est la valeur numérique en présence du potentiel zéro à l'entrée de l'amplificateur d'instruments et Dn1 et Dn0, n = 0, 1, 2, 3 sont respectivement les valeurs numériques dans les positions k = 1 et k = 0.

4. procédé selon l'une des revendications 1 à 3, caractérisé en ce que le calcul de la position k de la prise du télétransmetteur à résistance et des constantes K1 et K2 s'effectue à l'aide d'un dispositif de calcul.

5. Circuit de mise en oeuvre du procédé selon l'une quelconque des revendications 1 à 4, comportant un télétransmetteur à résistance présentant une borne ajustable (1) et deux gammes de résistance fixes (12, 13) entre lesquelles est située une gamme de résistance utile (14) pour la prise (1), circuit dans lequel une borne (10) de l'une des gammes de résistance fixes du télétransmetteur à résistance est reliée à une source de courant (20) et présente un premier conducteur (21), une borne (11) de l'autre gamme de résistance fixe présente un troisième conducteur (27) et ces conducteurs sont couplés à l'ensemble d'un amplificateur d'instruments (7) suivi d'un convertisseur analogique-numérique 9, une borne (15) de la prise présentant un deuxième conducteur (25), caractérisé en ce que le convertisseur analogique-numérique (9) est suivi d'un dispositif de calcul (38), en ce que le troisième conducteur (17) est raccordé à une résistance de mesure (28) reliée au potentiel zéro, et en ce que les premier, deuxième et troisième conducteurs (21, 25, 27) peuvent être reliés à l'amplificateur d'instruments (7).

6. Circuit selon la revendication 5, caractérisé en ce que les trois conducteurs (21, 25, 27) quittant le télétransmetteur à résistance (2) sont reliés aux entrées (23, 26, 29) d'un multiplexeur (24) dont les sorties (35, 36) sont reliées à l'amplificateur d'instruments (7) et en ce qu'une autre entrée (31) du multiplixeur (24) est au potentiel zéro.

7. Circuit selon la revendication 6, caractérisé en ce que, pour transférer les tensions U1, U2 et U3 et le potentiel zéro vers l'amplificateur d'instruments (7), les entrées (23, 26, 29, 31) du multiplexeur peuvent être commutées dans un ordre prédéterminé aux entrées de cet amplificateur d'instruments (5, 6).

Fig.1

Fig.2